# EUROPÄISCHE PATENTSCHRIFT

(11) **EP 1 238 566 B1**
(45) Veröffentlichungstag und Bekanntmachung des Hinweises auf die Patenterteilung: **03.11.2004**
(21) Anmeldenummer: 00983119.9
(22) Anmeldetag: 09.11.2000
(51) Int. Cl.: H04R 3/00, H04R 3/12, H04R 5/02, H04S 3/00

(54) **VERFAHREN UND ANORDNUNG ZUR VERBESSERUNG DER KOMMUNIKATION IN EINEM FAHRZEUG**
METHOD AND DEVICE FOR IMPROVING COMMUNICATION IN A VEHICLE
PROCEDE ET DISPOSITIF POUR AMELIORER LA COMMUNICATION DANS UN VEHICULE

(30) Priorität: 29.11.1999 DE 19958836
(43) Veröffentlichungstag der Anmeldung: 11.09.2002
(73) Patentinhaber: Deutsche Telekom AG, 53113 Bonn (DE)
(72) Erfinder: FELS, Peter, 12555 Berlin (DE)
(86) Internationale Anmeldenummer: PCT/EP2000/011071
(87) Internationale Veröffentlichungsnummer: WO 2001/041499

(56) Entgegenhaltungen:
- EP-A- 0 721 178
- WO-A-97/27724
- US-A- 4 638 287
- PATENT ABSTRACTS OF JAPAN vol. 015, no. 106 (E-1044), 13. März 1991 (1991-03-13) -& JP 02 312349 A (FUJITSU TEN LTD), 27. Dezember 1990 (1990-12-27)

## Beschreibung

Die Erfindung ist auf eine Optimierung der Schallversorgung und damit auf eine Verbesserung, insbesondere der internen Kommunikation, in Fahrzeugen ausgerichtet.

Die derzeit verfügbare Technik erlaubt es, mittels Pegelsteller, die über Speichermedien oder Rundfunkübertragungen zur Verfügung gestellten, meist zweikanaligen Signalanteile, den Lautsprechern mit unterschiedlichen Pegelanteilen dosiert zuzuordnen.
Bei Lösungen nach dem o. g. Prinzip erfolgt die Verteilung der Signale über alle vorhandenen Lautsprecher ausschließlich durch eine Festlegung der Pegelverteilung.

Aus WO-A-9727724 "Sound System" ist eine Lösung zur Herstellung von optimalen Filterkurven in Abhängigkeit von den benachbarten Lautsprechern bekannt, bei welcher jedem Sitzplatz mindestens ein Lautsprecher zugeordnet ist. In unmittelbarer Nähe der Lautsprecher sind Mikrofone angeordnet, welche die von den Lautsprechern abgegebenen Signale aufnehmen und weiter verarbeiten. Die Mikrofone werden dazu verwendet, die aufgenommenen Signale zur Erzeugung von Filterfunktionen in definierter Form zu gewinnen, die es ermöglicht, das erstmals abgestrahlte Signal je Lautsprecher wieder zu verändern. Das heißt, die Lösung bezieht sich nicht auf die interne Kommunikation innerhalb des Fahrzeugs, sondern sie ist lediglich auf die Wiedergabe von vorproduzierten Signalen ausgerichtet. Die Anordnung besteht im Wesentlichen aus einer Aneinanderreihung von unterschiedlichen digitalen Filter. Durch Kombination und Abgleichung der Filter für die 4 Kanäle links, rechts , links hinten rechts hinten (Sourround) wird erreicht, dass die relativen Kopfübertragungsfunktionen (HRTF's) für vier sogenannte hypothetische Fahrzeuginsassen und für die aktuellen Positionen der Lautsprecher des Wiedergabesystems kompensiert werden. Bei dieser Lösung ist jedoch eine Zuordnung und Beeinflussung links zu rechts und umgekehrt nicht möglich.

Aus DE 196 20 980 ist ein Audiogerät für ein Fahrzeug bekannt, bei dem durch entsprechende sprachgesteuerte oder signalgesteuerte Zuordnung Telefongespräche so abgewickelt werden können, dass eine Zuordnung zum Telefonierenden erfolgt, dass aber auch die Positionierung durch eine reine Intensitätssteuerung frei festgelegt werden kann.

Des Weiteren ist aus DE 43 08 398 eine Lösung für ein aktives Geräuschverminderungssystem für den Fahrgastraum eines Kraftfahrzeugs bekannt, welches auf das Vermindern von Vibrationsgeräuschen ausgerichtet ist, die von einem 4-Zylinder-4-Takt-Motor erzeugt und zum Fahrgastraum übertragen werden. Lösungen, die auf die Geräuschverminderung in Fahrgasträumen ausgerichtet sind, sind zwar in der Lage bessere Bedingungen, sowohl für die interne Verständigung innerhalb der Fahrgastzelle, als auch für die externe Verständigung von der Fahrgastzelle nach außen, beispielsweise über Funkruf, zu schaffen. Das heißt, derartige Systeme können demnach zwar störende Geräusche vermindern, sie sind jedoch nicht in der Lage, diese Geräusche vollständig zu kompensieren.

Auch bei weitestgehender Geräuschreduzierung von Motor- und Fahrgeräuschen besteht weiterhin das Grundproblem der Verständigung innerhalb einer Fahrgastzelle, das insbesondere aus der Sitzanordnung innerhalb der Fahrgastzelle resultiert. Um eine gute insbesondere aus der Sitzanordnung innerhalb der Fahrgastzelle resultiert. Um eine gute Verständigung innerhalb der Fahrgastzelle zu erreichen, sind insbesondere bei Gesprächen, an denen sich sowohl die Personen im vorderen Bereich als auch im hinteren Bereich der Fahrgastzelle beteiligen, alle am Gespräch beteiligten Personen gezwungen, sich durch veränderte Körperhaltung und/oder durch Erhöhung der Lautstärke der eigenen Stimme verständlich zu machen. Konkret bedeutet das, dass Fahrer und Beifahrer den Kopf etwas nach hinten drehen müssen, und dass die hinten sitzenden Person sich zumeist etwas vorbeugen müssen, um sich gegenseitig deutlich verständigen zu können. Eine derartige Situation beeinträchtigt insbesondere die Konzentration und damit die Aufmerksamkeit des Fahrzeugführers und gefährdet daher allgemein die Verkehrssicherheit.

Aus DE 34 131 81 ist ein Großraumbeschallungssystem für die Beschallung beliebig großer Räume oder Freiflächen bekannt, bei dem die prinzipielle Funktion auf einer näherungsweisen Zeit- und soweit erforderlich Lautstärke getreuen Unterstützung bzw. Simulation der sich von der Quelle über den Aktionsbereich bis in den Rezeptionsbereich hinein ausbreitenden Schallfelder mit einer zeitlichen Quellenpriorität erfolgt. Das bedeutet, dass die Schallstrahler jeweils erst nach dem Vorbeiziehen der Wellenfronten der Originalschallquelle bzw. des diese simulierenden Schallstrahlers und der quellennäheren Schallstrahler abstrahlen, und dass die Zeitabstände bzw. Verstärkungen nach Leistung und Art der Quellen differenziert sind. Mittels dieser Lösung werden die Widersprüche zwischen der Laufzeit- und der Amplitudenlokalisation, auch in Übergangsgebieten, wo beim Vergleich meistens der zuerst hörbare Schallstrahler statt der Originalschallquelle geortet wurde, gelöst. Die Lösung bezieht sich demgemäß auf die Quelle, den Aktionsbereich und die Schallstrahlerorte und berücksichtigt die Schallquellenleistung.

Weiterhin ist aus EP 0712 264 ein Verfahren und eine Anordnung zur Mehrkanaltonwiedergabe bekannt. Diese Lösung hat zum Ziel, mehrkanalige Tonprogramme angepasst, aber virtuell entsprechend dem Standard, wiederzugeben.

Im Gegensatz zu den oben beschriebenen Lösungen ist die Lösung der Anmelderin auf Tonsignale ausgerichtet, die in einem Raum aufgenommen und in demselben Raum unter sollen. Dementsprechend ist auch die Abgrenzung zu den im Stand der Technik beschriebenen Lösungen zu sehen
Die technische Aufgabe, die der Erfindung zugrunde liegt, ist insbesondere auf eine Verbesserung der Kommunikation der sich innerhalb der Fahrgastzelle eines Fahrzeugs befindenden Personen, einschließlich einer besseren Kommunikation dieser Personen mit Sprachkommunikationssystemen außerhalb des Fahrzeugs, ausgerichtet.
Die technische Aufgabe ist somit insbesondere auf die Aufnahme und Wiedergabe von Signalen in einem geschlossenen Raum ausgerichtet, wobei der Position und der Charakteristik der aufgenommenen Signale bei der Wiedergabe Rechnung getragen werden soll.

Erfindungsgemäß wird die Kommunikation im Fahrgastraum eines Fahrzeugs durch ein Verfahren und eine Anordnung zur Verbesserung der Kommunikation realisiert, welches auf eine komplexe Sprachaufnahme- und Wiedergabe ausgerichtet ist. Dabei wird jedem Sitzplatz an geeigneter Stelle (Sitz- bzw. Kopfposition) ein Mikrofon, M1-M4 und eine Lautsprecheranordnung L10-L14 zugeordnet Die Verteilung der von den Mikrofonen M1-M4 aufgenommenen Sprachsignale erfolgt über eine Prozessorschaltung auf alle oder zumindestens auf einen großen Teil der eingebauten Lautsprecher L10-L14 mit unterschiedlichem Pegel und unterschiedlicher Laufzeit in Abhängigkeit von der Aufnahmeposition und den Positionen der Wiedergabeeinrichtungen. Gleichzeitig erfolgt eine Frequenzanpassung im Aufnahmekanal zur Begrenzung der Störsignalanteile und zur Klanganpassung und im Wiedergabekanal zur raumakustischen Anpassung an die Position des Lautsprechers und an den durch den Fahrzeugtyp vorgegebenen Fahrgastraum.

Ein aufgenommenes Sprachsignal gelangt über das der jeweils sprechenden Person zugeordnete Mikrofon M1-M4 auf eine Eingangsstufe 7 mit einem Mikrofonverstärker 7a und der damit verbundenen Pegeleinstellung sowie zum Eingangsfilter zur Störpegelminimierung und Frequenzanpassung 7b. Danach gelangt das Signal in die Prozessstufe 8, in der es auf so viele Signalwege aufgeteilt wird, wie Ausgangskanäle vorhanden sind. In diesen Signalwegen wird in Abhängigkeit der Zuordnung der Ausgangskanäle zu jedem Signalweg eine Signalverarbeitung in Form einer Laufzeitkorrektur über eine Baugruppe zur Laufzeitkorrektur 8a und eine Ausgangskanäle zu jedem Signalweg eine Signalverarbeitung in Form einer Laufzeitkorrektur über eine Baugruppe zur Laufzeitkorrektur 8a und eine Pegeldifferenzierung über eine Baugruppe zur Pegeldifferenzierung 8b vorgenommen. Die Pegeldifferenzierung berücksichtigt erstens die Position der Signalaufnahme (Mikrofon M1-M4) und zweitens die Positionen der verteilt angeordneten Lautsprecher L10-L14, die mit den einzelnen Ausgangskanälen verbunden sind. Jeder Signalweg ist ausgangsseitig mit einer Summierstufe 8c und einer Verteilstufe 8d verbunden, deren Anzahl mit der Anzahl der Ausgangskanäle übereinstimmt, um von jedem Eingangsweg das von den einzelnen Mikrofonen M1-M4 aufgenommene und in den Signalwegen jeweils gesondert bearbeitete Signal den einzelnen Ausgangswegen zuzuordnen. Damit ist gewährleistet, dass von jedem Lautsprecher L10-L14 das oder die Eingangssignale in einer bestimmten Form wiedergegeben werden können. Nach der Summierstufe 8c und der Verteilstufe 8d gelangt das bearbeitete Signal auf eine Anpassstufe 9 mit der Anzahl von Kanälen, die alle für erforderlich erachteten Lautsprecher L 10-L 14 mit dem Signal versorgen sollen. Bei der Übertragung von Mehrkanaltonprogrammen ist es notwendig, die Anzahl der Lautsprecher bei einem Fahrzeug mit vier Personen um mindestens einen zusätzlichen 5. Lautsprecher zu erhöhen. In der Anpassstufe 9 wird eine weitere Pegelanpassung über eine Baugruppe zur Pegelanpassung 9a und eine Frequenzanpassung über ein Raumkorrekturfilter zur Frequenzanpassung 9b durchgeführt, welche die räumlichen Bedingungen des Fahrzeugs berücksichtigen sollen. Gleichzeitig ist die Möglichkeit gegeben, die Lautstärkebeeinflussung individuell zu gestalten. Weitere an die Eingangsstufe 7 und an die Anpassstufe 9 angeschaltete Eingangskanäle 5/6 bzw. Ausgangskanäle 15/16 sind für externe Verbindungen, wie Telefon, Aufzeichnungsmöglichkeiten, Teilnahme an Videokonferenzen u. a. vorgesehen. Die Signalbearbeitung und Signalzuordnung ermöglicht das jeweils aufgenommene Sprachsignal im Inneren des Fahrzeuges so über die Lautsprecheranordnung zu verteilen, dass die interne Kommunikation erheblich verbessert wird.

Das erfindungsgemäße Kommunikationssystem wird anhand eines Ausführungsbeispiels für ein Fahrzeug mit 5 Sitzplätzen, entsprechend Fig.. 2, näher erläutert. sich auch eine seitliche Montage, beispielsweise in der jeweiligen Türverkleidung, realisieren. Im hinteren Bereich der Fahrgastzelle werden die Mikrofone M3-M4 vorzugsweise in der Rückseite der Lehnen der vorderen Sitze oder bei Richtmikrofonen seitlich in der Fahrzeugkarosserie angeordnet. Dem fünften Insassen, dessen Sitz sich zwischen den Sitzen der Insassen 3 und 4 befindet, ist normalerweise kein einzelnes Mikrofon zugeordnet. Er kann optional die Mikrofone M3 und M4 benutzen. Die Mikrofone M1-M4 sind mit einer Eingangsstufe 7 verbunden, welche aus n-kanaligen Eingängen zur Pegel- und Frequenzanpassung, Mikrofonverstärker 7a und Eingangsfilter zur Störpegelminimierung und Frequenzanpassung 7b besteht, wobei n der Anzahl der Insassen des Fahrzeugs entspricht. Die Eingänge können über ein Schaltmittel auf ankommende Signale von außen (Eingang externe Informationskanäle DVB/DAB/ISDN 5) und/oder von internen Speichermedien (Eingang Audiovisuelle interne Speicher CD/DVD/MTG 6) umgeschaltet werden. In einer der Eingangsstufe 7 nachgeordneten Prozessstufe 8 werden die ankommenden Eingangssignale der Mikrofone M1-M4 über Baugruppen zur Laufzeitkorrektur 8a₁₋₅ mit unterschiedlichen Laufzeiten und über Baugruppen zur Pegeldifferenzierung 8b₁₋₅ mit unterschiedlichen Pegeln bearbeitet, in den Summierstufen 8c₁₋₅ summiert und über Verteilstufen 8d₁₋₅ auf die ausgewählten Ausgangskanäle verteilt Über eine Anpassstufe 9 mit Raumkorrekturfiltern zur Frequenzanpassung 9b₁₋₅ und Baugruppen zur Pegelanpassung 9a₁₋₅ erfolgt die differenzierte Verteilung und die Ausgabe der Sprachsignale auf die einzelnen Lautsprecher L10-L14. Die ankommenden Signale werden, entsprechend ihres Inhaltes (Telefonsignal, Multimediasignal u. a.), signaltechnisch behandelt und auf die Wiedergabeeinrichtung zugeschnitten auf die Lautsprecher L10-L14 verteilt Bei Bedarf kann auch eine Umschaltung auf Ausgänge für externe Infonmationskanäle 15/16 vorgenommen werden.
Die oben beschriebene tontechnische Anordnung kann beispielsweise auch mit einer zentralen Bildwiedergabeeinrichtung 19 oder mit einer den einzelnen Plätzen zugeordneten Bildwiedergabeeinrichtung 19₁₋₄ gekoppelt werden. Damit wird eine komplexe multimediale Nutzung des Kommunikationssystems möglich.
Gesteuert wird das System über eine Steuereinheit 17, in der bereits voreingestellte Einstellungen und Nutzungsvarianten als abrufbare Setups gespeichert sind. Die Steuereinheit 17 ist weiterhin mit einer zentralen Bedieneinheit 18, die vorzugsweise dem Bildwiedergabeeinrichtung 19₁₋₄ gekoppelt werden. Damit wird eine komplexe multimediale Nutzung des Kommunikationssystems möglich.
Gesteuert wird das System über eine Steuereinheit 17, in der bereits voreingestellte Einstellungen und Nutzungsvarianten als abrufbare Setups gespeichert sind. Die Steuereinheit 17 ist weiterhin mit einer zentralen Bedieneinheit 18, die vorzugsweise dem Fahrer zugeordnet ist und damit eine zentrale Einflußnahme ermöglicht und mit dezentralen den einzelnen Sitzplätzen zugeordneten Bedieneinheiten 18₁₋₄ verbunden. Eine Ansteuerung der Steuereinheit 17 durch externe Signale ist ebenfalls möglich. Die Nutzung einer sich ergänzenden und beeinflussenden Laufzeit und Pegelkorrektur im erfindungsgemäßen Sinne gewährleistet innerhalb der Fahrgastzelle eine zeitgleiche Behandlung und platzunabhängige Wiedergabe mehrerer Klangzentren bzw. Signalquellen bis hin zur Mehrkanalstereofonie. Dieses spezielle Signalprozessing verbessert wesentlich die akustische Entkopplung der Aufnahme- und Wiedergabekanäle als nur eine reine Verstärkungsoptimierung.
Zusätzliche wahlweise in die jeweiligen Mikrofoncingänge der Mikrofone M1-M4 eingefügte Eingangsfilter dienen dazu, die internen Geräuschsignale als Störanteile zu dämpfen und die Mikrofonsignale zu optimieren. Die Optimierung der Klanganpassung im jeweiligen Fahrzeug wird vorzugsweise über Ausgangsfilter vorgenommen. Das erfindungsgemäße Kommunikationssystem lässt sich auch für andere Nutzungsvarianten, die auf die Kommunikation mit externen Teilnehmern ausgerichtet sind, vorteilhaft einsetzen. So ist eine Nutzung als Telefoneinrichtung mit freier Zuordnung der Teilnehmer innerhalb des Fahrzeugs möglich. Denkbar ist auch eine Variante, bei der die erfindungsgemäße Lösung als Videokonferenzsystem ausgebildet ist. Eine weitere Nutzungsmöglichkeit wird darin gesehen, multimediales Programm-Material aus internen Speichern oder von extern empfangenen Signalen einzuspielen.
Bei einer Nutzung im Rahmen von Telefonprozessen kann aufgrund der Struktur der erfindungsgemäßen Lösung ein Gespräch, beispielsweise jedem Platz und damit jedem Insassen, zugeordnet werden. Die Wiedergabe kann dabei gesteuert über ausgewählte Lautsprecher erfolgen, so dass auch ausgewählte Insassen des Fahrzeugs am Telefongespräch beteiligt werden können. Gleichzeitig kann das Mithören an bestimmten Plätzen eingeschränkt werden. Das geschieht dadurch, dass das ankommende Signal auf entsprechend ausgewählte Lautsprecher geschaltet und als fiktive bzw. virtuelle Sprachquelle behandelt wird. Das oder die abgehenden Signale werden dem gleichen Prozess unterzogen wie das Signal, welches für die interne Kommunikation genutzt wird. Eine Ausgliederung bestimmter Plätze oder Bereiche sowohl von der Aufnahme- als auch von der Wiedergabeseite kann ebenfalls über die Bedieneinheiten der Steuereinheit 17 eingestellt werden. Damit ist die Möglichkeit gegeben, Telefonkonferenzen durchzuführen. Eine weitere denkbare Variante beinhaltet die Einbeziehung von Bildsignalen. Für eine derartige Variante muss das Fahrzeug zusätzlich mit Bildaufzeichnungs- und Wiedergabeeinrichtungen ausgerüstet sein. Dadurch wird die Voraussetzung für eine Videokonferenz mit externen Gegenstellen geschaffen. Gleichzeitig ist es möglich, die Bildeinrichtungen für TV-Programme und multimediale Dienste zu nutzen. Die Audiosignale werden entsprechend zugeordnet, so dass für jeden Platz eine optimale mehrkanalige Wiedergabe erfolgen kann.
Die einzelnen Nutzungsvarianten sind vorzugsweise in einem Steuerungsprogramm zusammengefasst und können sowohl von der zentralen Bedieneinheit 18 in der Nähe des Fahrzeugführers, als auch in eingeschränktem Maße von den einzelnen Fahrzeuginsassen durch eine vereinfachte Ausführung der Bedieneinheit 18₁₋₄ in der Nähe der einzelnen Sitzplätze abgerufen werden.
Bei der Wiedergabe intern gespeicherter oder extern zugeführter Programme in Bild und/oder Ton können die ein- oder mehrkanaligen Signale ebenfalls den einzelnen internen Plätzen bzw. Versorgungsbereichen zugeordnet werden. Eine Aufzeichnung auf verfügbare Speichermedien kann dabei beispielsweise über Verbindungen mit vorab ausgewählten Ausgangskanälen 1-n erfolgen.

Durch die Verteilung der Mikrofonsignale auf alle Lautsprecher L10-L14 mit unterschiedlicher Signalbehandlung (Laufzeit und Pegel) wird durch die erfindungsgemäße Lösung sowohl eine gute Verständlichkeit im gesamten Bereich der Fahrgastzelle des Fahrzeuges erreicht, als auch durch entsprechende Steuerungsmechanismen die Rückkopplungsgefahr minimiert. Jeder Insasse kann frei wählen, ob er sich an der Kommunikation beteiligen will.

Außerdem sind die Möglichkeiten einer weiteren Kombination mit multimedialen Diensten in einfacher Form gegeben. Dazu gehören Telefonieren von jedem Platz aber auch gemeinsam, Telefonkonferenzanwendung bei gleichzeitiger Integration der Bildwiedergabe und -aufnahme sowohl für die vorderen Plätze, als auch für die Plätze im hinteren Bereich. Aber auch die Nutzung für vorhandene bzw. zu empfangene Informationen, z. B. über Rundfunk und/oder Fernsehen, kann mit diesem System verbessert werden.

Die erfindungsgemäße Lösung ist insbesondere für PKW konzipiert. Denkbar ist jedoch auch die Anwendung in größeren Fahrzeugen, wie beispielsweise in speziellen, als Multimediabusse ausgebildeten Fahrzeugen, sowie auch in Lastfahrzeugen und anderen Verkehrsmitteln, wie Schiffen, Bahnen und Flugzeugen. Dazu bedarf es jedoch einer größeren Anzahl von Aufnahme- und Wiedergabekanälen bzw. Wiedergabegeräten und speziell zugeschnittener Signalprozesseinheiten.

### Bezugszeichenaufstellung

- 1-5: Insassen des Fahrzeugs
- M1-M4: Mikrofone
- 5: Eingang audiovisuelle interne Speicher
- 6: Eingang externe Informationskanäle DVB/DVD/ISDN etc.
- 7: Eingangsstufe
- 7a: Mikrofonverstärker
- 7b: Eingangsfilter zur Störpegelminimierung und Frequenzanpassung
- 8: Prozessstufe
- 8a: Baugruppe zur Laufzeitkorrektur
- 8b: Baugruppe zur Pegeldifferenzierung
- 8c: Summierstufe
- 8d: Verteilstufe
- 9: Anpassstufe
- 9a: Baugruppe zur Pegelanpassung
- 9b: Raumkorrekturfilter zur Frequenzanpassung
- L10-L14: Lautsprecher
- 15; 16: Ausgang externe Informationskanäle ISDN etc.
- 17: Steuereinheit
- 18: zentrale Bedieneinheit
- 18₁₋₄: den einzelnen Plätzen dezentral zugeordnete Bedieneinheiten
- 19: zentrale Bildwiedergabeeinrichtung
- 19₁₋₄: den einzelnen Plätzen zugeordnete Bildwiedergabeeinrichtung

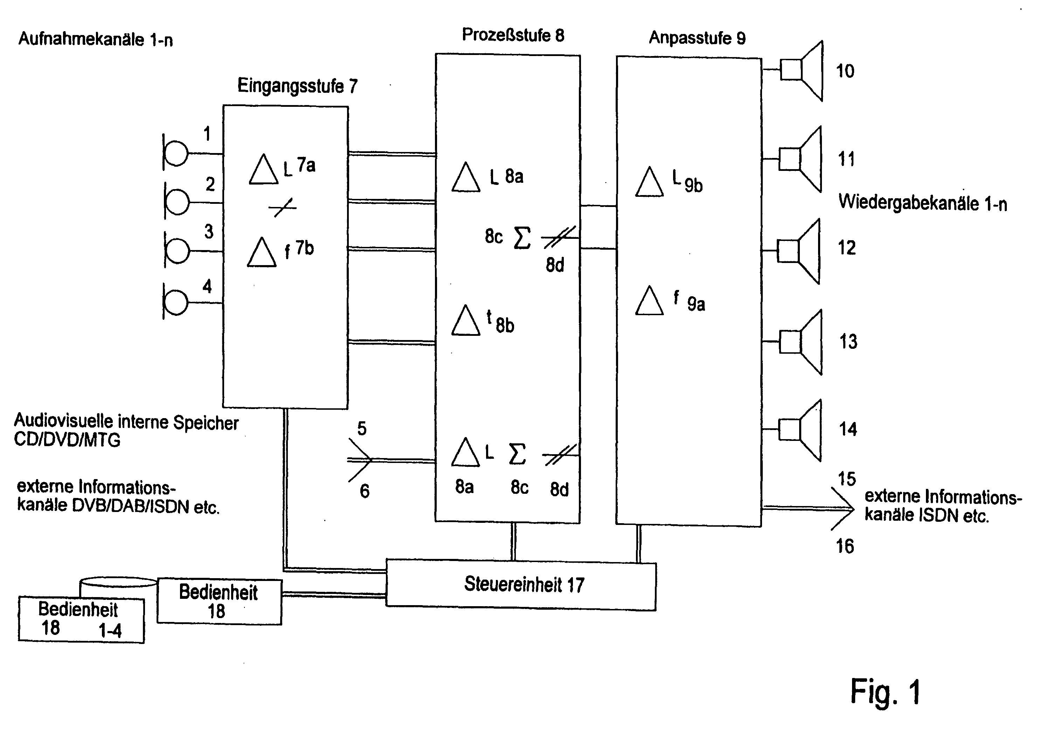

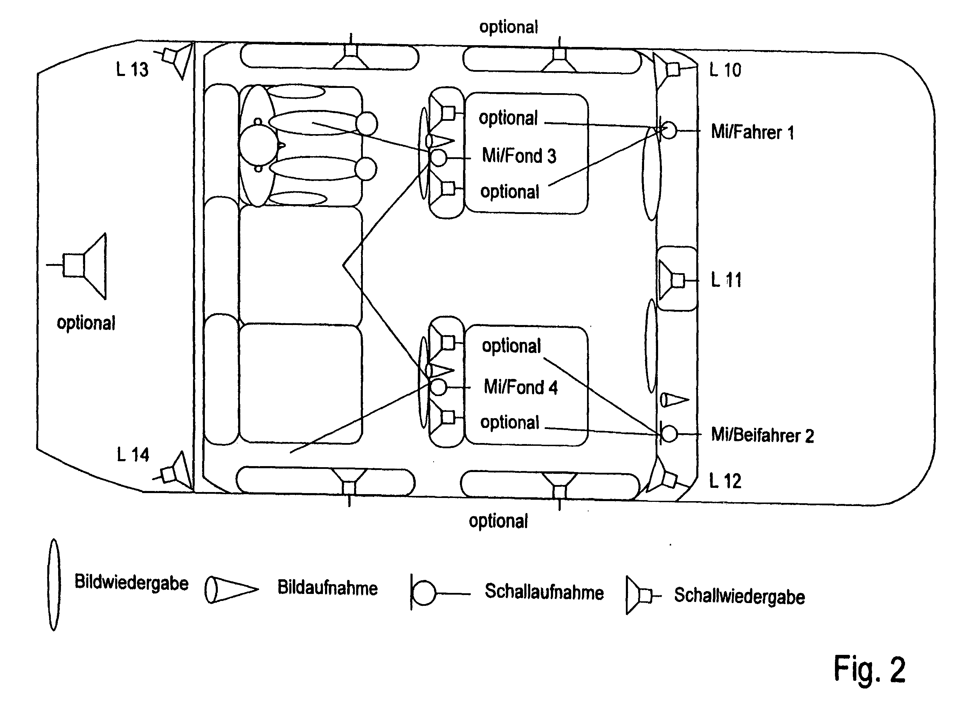

## Patentansprüche

1. Verfahren zur Verbesserung der Kommunikation in einem Fahrzeug, **dadurch gekennzeichnet, dass**
a) die Sprachsignale der Insassen eines Fahrzeugs für jeden Insassen einzeln über ein ihm im Rahmen seines Sitzplatzes zugeordnetes Mikrofon (M1-M4) aufgenommen werden, wobei die aufgenommenen Sprachsignale für jeden Insassen getrennt in einer Eingangsstufe (7) über einen Mikrofonverstürker (7a) verstärkt und über ein Eingangsfilter zur Störpegelminimierung und Frequenzanpassung (7b) gefiltert werden, dass
b) die verstärkten und gefilterten Sprachsignale jedes einzelnen Insassen zur Aufteilung auf die Ausgangskanäle und damit zur Aufteilung auf die einzelnen Komponenten einer aus Lautsprechern (L10-L14) bestehenden Sprachausgabeeinrichtung, in einer Prozessstufe (8) in Abhängigkeit der örtlichen Zuordnung des Mikrofons (M1-M4) im Fahrzeug, über welches das Sprachsignal aufgenommen wurde und in Abhängigkeit der örtlichen Zuordnung jedes einzelnen Lautsprechers (L10-L14) der Sprachausgabeeinrichtung im Fahrzeug über die das Sprachsignal ausgegeben werden soll, über eine Summier- und Verteilstufe (8c;8d) einer für jeden Ausgangskanal individuellen Signalverarbeitung in Form einer Laufzeitkorrektur und einer Pegeldifferenzierung unterzogen wird, und dass
c) die Zuordnung des für jeden Ausgangskanal individuell verarbeiteten Sprachsignals zu den einzelnen Ausgangskanälen und damit zu den einzelnen Lautsprechern (L10-L14) der Sprachausgabeeinrichtung über eine Anpassstufe (9) erfolgt, in der über eine Baugruppe zur Pegelanpassung (9a) und ein Raumkorrektufilter zur Frequenzanpassung (9b) eine auf jeden Ausgangskanal und damit auf jeden Lautsprecher (L10-L14) der Sprachausgabeeinrichtung abgestimmte Anpassung des jeweiligen Sprachsignals an die räumlichen Bedingungen des Fahrzeugs und die gewünschte Lautstärke erfolgt.

2. Verfahren nach Anspruch 1, **dadurch gekennzeichnet, dass** über an die Eingangsstufe (7) angeschaltete Eingangskanäle (5;6) von audiovisuellen internen Speichern bzw. externen Informationskanälen eingespeiste Signale über die Prozessstufe (8) und die Anpassstufe (9) auf die räumlichen Bedingungen des Fahrzeugs abgestimmt, zu den einzelnen Ausgabekanälen und damit in Abhängigkeit von der Art des Signals, zu den einzelnen Lautsprechern (L10-L14) bzw. zu den einzelnen Komponenten für die Bildwiedergabe übertragen werden.

3. Anordnung zur Verbesserung der Kommunikation in einem Fahrzeug bei dem jedem Sitzplatz mindestens ein Lautsprecher (L10-L14) zugeordnet ist,
**dadurch gekennzeichnet, dass** jedem Sitzplatz zusätzlich zu den Lautsprechern (L10-L14) ein Mikrofon (M1-M4) einer Sprachaufnahmeeinrichtung zugeordnet ist, dass die einzelnen Mikrofone (M1-M4) der Sprachaufnahmeeinrichtung über eine Eingangsstufe (7), bestehend aus einem Mikrofonverstärker (7a) und einem Eingangsfilter (7b), eingerichtet zur Störpegelminimierung und Frequenzanpassung der aufgenommenen Sprachsignale, mit einer Prozessstufe (8), bestehend aus einer Baugruppe zur Laufzeitkorrektur (8a), eingerichtet zur individuellen Signalverarbeitung in Form einer Laufzeitkorrektur für jeden einzelnen Ausgangskanal, einer Baugruppe (8b), eingerichtet zur Pegeldifferenzierung einer Summierstufe (8c) und einer Verteilstufe (8d), verbunden sind, dass die Prozessstufe (8) über eine Anpassstufe (9), bestehend aus einer Pegelanpassungsstufe (9a) und einem Raumkorrekturfilter (9b), eingerichtet zur Frequenzanpassung des jeweiligen Sprachsignals an die räumlichen Bedingungen des Fahrzeugs, mit den einzelnen Lautsprechern (L10-L14) der Sprachausgabeeinrichtung verbunden ist, und dass sowohl die Eingangsstufe (7) als auch die Prozessstufe (8) und die Anpassstufe (9) mit einer Steuereinheit (17) verbunden sind, an die eine zentrale Bedieneinheit (18) angeschlossen ist.

4. Anordnung nach Anspruch 3, **dadurch gekennzeichnet, dass** die Anpassstufe (9) mit mindestens einem externen Informationskanal (15;16) verbunden ist.

5. Anordnung nach Anspruch 3, **dadurch gekennzeichnet, daß** die Prozessstufe (8) mit mindestens einem audiovisuellen internen Speicher (5) und/oder mindestens einem externen Informationskanal (6) verbunden ist.

6. Anordnung nach Anspruch 3, **dadurch gekennzeichnet, dass** die Eingangsstufe (7) mindestens mit einem externen Informationskanal verbunden ist, welcher ebenfalls über die Prozessstufe (8) und die Anpassstufe (9) mit den Lautsprechern (L10-L14) der Wiedergabeeinrichtung verbunden ist.

7. Anordnung nach Anspruch 3, **dadurch gekennzeichnet, dass** die zentrale Bedieneinheit (18) dem Beifahrerplatz zugeordnet ist.

8. Anordnung nach Anspruch 3, **dadurch gekennzeichnet, dass** die Steuereinheit (17) zusätzlich mit mindestens einer einem weiteren Sitzplatz zugeordneten Bedieneinheit (18₁₋₄) mit eingeschränkter Funktion verbunden ist.

## Claims

1. Method for improving the communication in a vehicle, **characterized in that**
a) the speech signals of the occupants of a vehicle are recorded individually for each occupant by a microphone (M1-M4) associated with each occupant within the framework of their seat, the recorded speech signals being amplified separately for each occupant in an input stage (7) through a microphone amplifier (7a) and being filtered through an input filter for noise level minimization and frequency matching (7b); **in that**
b) for distribution to the output channels and thus for distribution to the individual components of a speech output system consisting of loudspeakers (L10-L14), the amplified and filtered speech signals of each individual occupant are subjected in a process stage (8) - depending on the position of the microphone (M1-M4) in the vehicle through which the speech signal was recorded and depending on the position of each individual loudspeaker (L10-L14) of the speech output system in the vehicle through which the speech signal is to be outputted - through a summating and distribution stage (8c; 8d) to signal processing, individual for each output channel, in the form of propagation time correction and level differentiation; and **in that**
c) the speech signal individually processed for each output channel is associated with the individual output channels and thus with the individual loudspeakers (L10-L14) of the speech output system by means of a matching stage (9) in which, through a module for level matching (9a) and a space correction filter for frequency matching (9b), the respective speech signal is matched to the physical conditions of the vehicle and the desired loudness in a manner adapted to each output channel and thus to each loudspeaker (L10-L14) of the speech output system.

2. Method according to claim 1, **characterized in that** signals supplied from audiovisual internal storage means or external information channels through input channels (5; 6) connected to the input stage (7) are adapted by the process stage (8) and the matching stage (9) to the physical conditions of the vehicle and are transmitted to the individual output channels and thus depending on the type of signal to the individual loudspeakers (L10-L14) or to the individual components for image reproduction.

3. Arrangement for improving the communication in a vehicle in which each seat is associated with at least one loudspeaker (L10-L14),
**characterized in that**, in addition to the loudspeakers (L10-L14), each seat is associated with a microphone (M1-M4) of a speech recording system, **in that** the individual microphones (M1-M4) of the speech recording system are connected through an input stage (7), consisting of a microphone amplifier (7a) and an input filter (7b), equipped for noise level minimization and frequency matching of the recorded speech signals, to a process stage (8), consisting of a module for propagation time correction (8a), equipped for individual signal processing in the form of propagation time correction for each individual output channel, and to a module (8b), equipped for level differentiation of a summating stage (8c) and a distribution stage (8d), **in that** the process stage (8) is connected through a matching stage (9), consisting of a level matching stage (9a) and a space correction filter (9b), equipped for frequency matching of the respective speech signal to the physical conditions of the vehicle, to the individual loudspeakers (L10-L14) of the speech output system, and **in that** both the input stage (7) and also the process stage (8) and the matching stage (9) are connected to a control unit (17) to which is connected a central operating unit (18).

4. Arrangement according to claim 3, **characterized in that** the matching stage (9) is connected to at least one external information channel (15; 16).

5. Arrangement according to claim 3, **characterized in that** the process stage (8) is connected to at least one audiovisual internal storage means (5) and/or to at least one external information channel (6).

6. Arrangement according to claim 3, **characterized in that** the input stage (7) is connected to at least one external information channel which is likewise connected through the process stage (8) and the matching stage (9) to the loudspeakers (L10-L14) of the reproduction system.

7. Arrangement according to claim 3, **characterized in that** the central operating unit (18) is associated with the front passenger seat.

8. Arrangement according to claim 3, **characterized in that** the control unit (17) is additionally connected to at least one operating unit (18₁₋₄) of restricted functionality and associated with a further seat.

## Revendications

1. Procédé d'amélioration de la communication dans un véhicule, **caractérisé en ce que**
a) les signaux vocaux émis par les occupants d'un véhicule sont reçus individuellement pour chaque occupant par l'intermédiaire d'un microphone (M1-M4) qui lui est affecté dans le cadre de sa place assise, ces signaux vocaux reçus sont séparés pour chaque occupant dans un étage d'entrée (7), amplifiés par un amplificateur de microphone (7a), et filtrés par un filtre d'entrée pour minimiser le niveau de bruit et corriger la fréquence (7b),
b) les signaux vocaux amplifiés et filtrés de chaque occupant individuel, destinés à être répartis dans les canaux de sortie et ainsi à être répartis dans les différents composants d'un dispositif de sortie vocale constitué de haut-parleurs (L10-L14), dans un étage de traitement (8), en fonction de l'affectation locale du microphone (M1-M4) dans le véhicule par lequel le signal vocal a été reçu et en fonction de l'attribution locale dans le véhicule de chacun des haut-parleurs (L10-L14) du dispositif d'émission vocale par lequel le signal vocal doit être émis, sont soumis, via une étape de sommation et de distribution (8c,8d)à un traitement du signal individuel pour chaque canal de sortie sous forme d'une correction de temps de propagation et d'une différenciation de niveau,
c) l'affectation du signal vocal traité individuellement pour chaque canal de sortie aux différents canaux de sortie et ainsi aux différents haut-parleurs (L10-L14) du dispositif d'émission vocale s'effectue par l'intermédiaire d'un étage d'adaptation (9), dans lequel une adaptation, accordée sur chaque canal de sortie et ainsi chaque haut-parleur (L10-L14) du dispositif de sortie vocale aux conditions spatiales du véhicule et à l'intensité sonore souhaitée, est effectuée par l'intermédiaire d'un module d'adaptation de niveau (9a) et d'un filtre de correction spatial destiné à corriger la fréquence.

2. Procédé selon la revendication 1, **caractérisé en ce que** les signaux distribués par des enregistreurs internes audiovisuels ou des canaux d'information externes, par l'intermédiaire de canaux d'entrée (5,6) mis en circuit à l'étage d'entrée (7), sont accordés aux conditions spatiales du véhicule via l'étage de traitement (8) et l'étage d'adaptation (9)et sont transmis aux différents canaux de sortie et ainsi, suivant le type de signal, aux différents haut-parleurs (L10-L14)ou aux différents composants destinés à la retransmission d'images.

3. Agencement destiné à améliorer la communication dans un véhicule dans lequel au moins un haut-parleur est affecté à chaque place assise,
**caractérisé en ce que**
en plus des haut-parleurs (L10-L14), est affecté à chaque place assise un microphone (M1-M4) faisant partie d'un dispositif de réception vocale, les différents microphones (M1-M4) du dispositif sont reliés, via un étage d'entrée (7) constitué d'un amplificateur de microphone (7a) et d'un filtre d'entrée (7b) destiné à minimiser les parasites et à corriger la fréquence des signaux vocaux reçus, à un étage de traitement (8) comprenant un module de correction du temps de propagation (8a) destiné au traitement individuel du signal sous forme d'une correction du temps de propagation pour chaque canal individuel de sortie, un module (8b) destiné à la différenciation de niveau, un étage de sommation (8c) et un étage de répartition (8d),
l'étage de traitement (8) est relié, par l'intermédiaire d'un étage d'adaptation (9) constitué d'un étage de correction de niveau (9a) et d'un filtre de correction spatiale (9b) destinés à une adaptation de fréquence du signal vocal respectif aux conditions spatiales du véhicule, aux différents haut-parleurs (L10-L14) du dispositif de sortie vocale,
et l'étage d'entrée (7) ainsi que l'étage de traitement (8) et l'étage d'adaptation (9) sont reliés à un contrôleur (17), à laquelle une unité de commande (18) centrale est connectée.

4. Agencement selon la revendication 3, **caractérisé en ce que** l'étage d'adaptation (9) est relié à au moins un canal d'information externe (15,16).

5. Agencement selon la revendication 3, **caractérisé en ce que** l'étage de traitement (8) est relié à au moins un enregistreur (5) audiovisuel interne et/ou à au moins un canal d'information externe (6).

6. Agencement selon la revendication 3, **caractérisé en ce que** l'étage d'entrée (7) est relié au moins à un canal d'information externe, lequel est également relié aux haut-parleurs (L10-L14) du dispositif de retransmission par l'intermédiaire de l'étage de traitement (8) et de l'étage d'adaptation (9).

7. Agencement selon la revendication 3, **caractérisé en ce que** l'unité de commande centrale (18) est affectée à la place du passager.

8. Agencement selon la revendication 3, caractérisé en ce le contrôleur (17) est relié en plus à au moins une unité de commande (18₁₋₄) ayant une fonction restreinte affectée à une autre place assise.
